(19) Europäisches Patentamt
European Patent Office
Office européen des brevets

(11) **EP 3 308 486 B1**

(12) **EUROPEAN PATENT SPECIFICATION**

(45) Date of publication and mention
of the grant of the patent:
**09.12.2020 Bulletin 2020/50**

(51) Int Cl.:
***H04L 1/00*** *(2006.01)*       ***H04L 27/26*** *(2006.01)*

(21) Application number: **16732835.0**

(86) International application number:
**PCT/US2016/036955**

(22) Date of filing: **10.06.2016**

(87) International publication number:
**WO 2016/201273 (15.12.2016 Gazette 2016/50)**

(54) **SYSTEMS, APPARATUSES AND METHODS FOR A SIGNAL EXTENSION PADDING SCHEME**

SYSTEME, VORRICHTUNGEN UND VERFAHREN FÜR EIN
SIGNALERWEITERUNGS-PADDING-SCHEMA

SYSTÈMES, APPAREILS, ET PROCÉDÉS POUR UN SCHÉMA DE REMPLISSAGE D'EXTENSION
DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.06.2015 US 201562174158 P**

(43) Date of publication of application:
**18.04.2018 Bulletin 2018/16**

(73) Proprietor: **NXP USA, Inc.**
**Austin TX 78735 (US)**

(72) Inventors:
• **SUN, Yakun**
**San Jose, CA 95129 (US)**
• **ZHANG, Hongyuan**
**Freemont, CA 94555 (US)**
• **CAO, Rui**
**Freemont, CA 94536 (US)**
• **SRINIVASA, Sudhir**
**Campbell, California 95008 (US)**

(74) Representative: **Krott, Michel**
**NXP Semiconductors**
**Intellectual Property Group**
**High Tech Campus 60**
**5656 AG Eindhoven (NL)**

(56) References cited:
**WO-A2-2011/087559      US-A1- 2013 315 264
US-A1- 2014 126 659**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Cross-Reference to Related Application

This disclosure claims the benefit of U.S. Provisional Patent Application No. 62/174,158, filed June 11, 2015, and U.S. Application No. 15/179,150, filed June 10, 2016.

Field of Use

This disclosure relates to a padding scheme for orthogonal frequency-division multiplexing (OFDM) signal extensions in a wireless data transmission system, for example, but not limited to a wireless local area network (WLAN) implementing the Institute of Electrical and Electronics Engineers (IEEE) 802.11 standard and any other standards and/or networks that can provide wireless transfer of data in outdoor deployments, outdoor-to-indoor communications, and device-to-device (P2P) networks.

Background of the Disclosure

The background description provided herein is for the purpose of generally presenting the context of the disclosure. Work of the inventors hereof, to the extent the work is described in this background section, as well as aspects of the description that may not otherwise qualify as prior art at the time of filing, are neither expressly nor impliedly admitted to be prior art against the present disclosure.

Orthogonal frequency-division multiplexing (OFDM) is often used to encode data on multiple carrier frequencies to improve data transmission performance under undesirable channel conditions. The current IEEE 802.11ax standard has adopted a 4x OFDM symbol duration to improve data efficiency. The longer data symbol, however, can often result in heavier processing complexity at the receiver. To help the receiver to process the longer data symbol with as little processing logic overhead as possible, a signal extension (SE) of multiples of 4ps can be used to allow additional processing time at the receiver before the next data symbols is received. Further discussion of SE with OFDM data symbols can be found in U.S. Application No. 14/728,802, entitled "High Efficiency Orthogonal Frequency Division Multiplexing (OFDM) Physical Layer (PHY)," filed on December 3, 2015.

Padding bits can be added to the last OFDM symbol according to the SE. For example, SE can be set to be $a \times 4\mu s$ where a=1, 2, 3 or 4. In this case, the useful bits in the last OFDM symbol may be determined based on $a \times \frac{1}{4}$ of $N_{CBPS}$, where $N_{CBPS}$ denotes the number of coded bits per symbol. When $N_{CBPS}$ is not multiples of 4, some modulation coding selection (MCS) scheme and SE combinations may lead to setting the number of padding bits to a non-integer number that is generally difficult, if not at all impossible, to implement.

US 2014/0126659 A1 refers to passing and encoding methods in a communication system. In a method for generating a physical layer, PHY, data unit for transmission via a communication channel, a plurality of information bits to be included in the PHY data unit is received. A number of padding bits that needs to be added to the information bits such that the information bits, after having been encoded, fill an integer number of orthogonal frequency division multiplexing, OFDM, symbols is determined. The number of padding bits is added to the information bits prior to encoding and the information bits are passed to a number of encoders. The information bits are encoded to generate coded data bits. A last block of the data unit is encoded differently from the previous blocks.

US 2013/0315264 A1 refers to encoding parameters for a wireless communication system. In a method for generating a THY data unit for transmission via a communication channel, information bits to be included in the PHY data unit are received. A number of padding bits are added to the information bits. The number of padding bits is determined based on respective virtual values of each of one or more encoding parameters. The information bits are passed to a number of encoders and are encoded, using the number of encoders, to generate coded bits. The coded bits are padded such that padded coded bits correspond to respective true values of each of the one or more encoding parameters.

Summary

It is the object of the present invention to provide an improved method and system for padding a signal extension of orthogonal frequency division multiplexing OFDM, symbols.

This object is solved by the subject matter of the independent claims.

Preferred embodiments are defined by the dependent claims.

Brief Description of the Drawings

Further features of the disclosure, its nature and various advantages will become apparent upon consideration of the following detailed description, taken in conjunction with the accompanying drawings, in which like reference characters refer to like parts throughout, and in which:

FIG. 1 provides an exemplary block diagram illustrating a transceiver system that includes a data encoder in which a padding scheme is employed, in accordance with various embodiments of the disclosure.
FIG. 2 provides an exemplary logic flow diagram illustrating a padding procedure that is implemented in an encoder (e.g., 101 in FIG. 1), in accordance with various embodiments of the disclosure.
FIG. 3 provides an exemplary logic diagram illustrating an example special padding rule by applying unequal bits per encoder, in accordance with various embodiments of the disclosure.
FIG. 4 provides an exemplary logic diagram illustrating an alternative implementation of an example special padding rule by adding additional padding bits, in accordance with various embodiments of the disclosure.
FIG. 5 provides an exemplary logic diagram illustrating an alternative implementation of an example special padding rule by apply dynamic puncturing for each encoder, in accordance with various embodiments of the disclosure.
FIG 6 provides an exemplary logic diagram illustrating an alternative implementation of an example special padding rule by enforcing an integer number of coded bits per symbol for short OFDM symbols, in accordance with various embodiments of the disclosure.

Detailed Description

This disclosure describes methods and systems for a padding scheme for orthogonal frequency-division multiplexing (OFDM) signal extensions (SE) in a wireless data transmission system. According to this disclosure, a new padding procedure including special padding rules is adopted when the calculated number of data bits per symbol for the last OFDM symbol ($N_{DBPS,Last}$) is not integer, or the calculated number of data bits per symbol per encoder $N_{DBPS,Last}/N_{ES}$ (where $N_{ES}$ denotes the number of encoders) is not an integer when there are more than one encoders per regular data symbol. The number of coded bits $N_{CBPS,Last}$ for the last symbol may be re-computed based on the changed $N_{DBPS,\text{Last}}$, and these parameters can then be used for encoding.

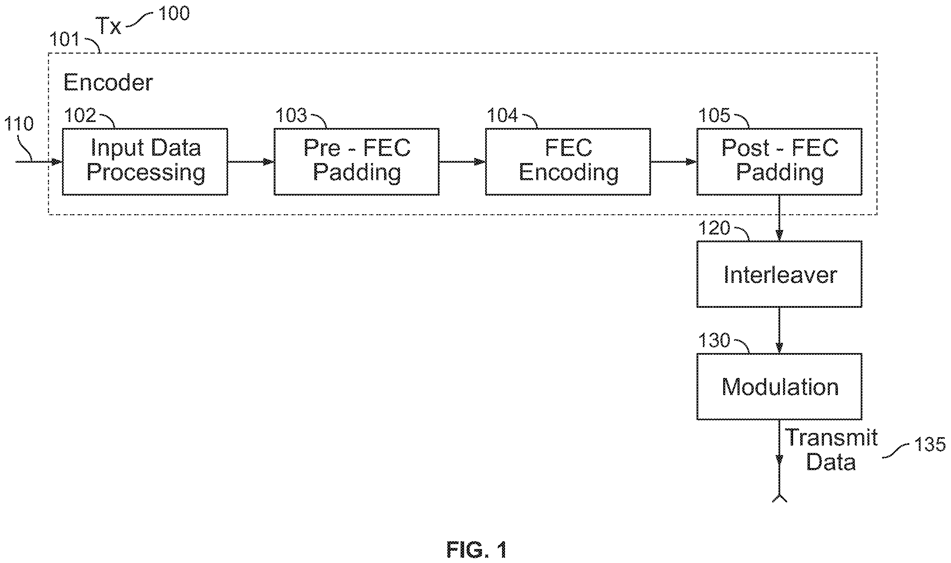

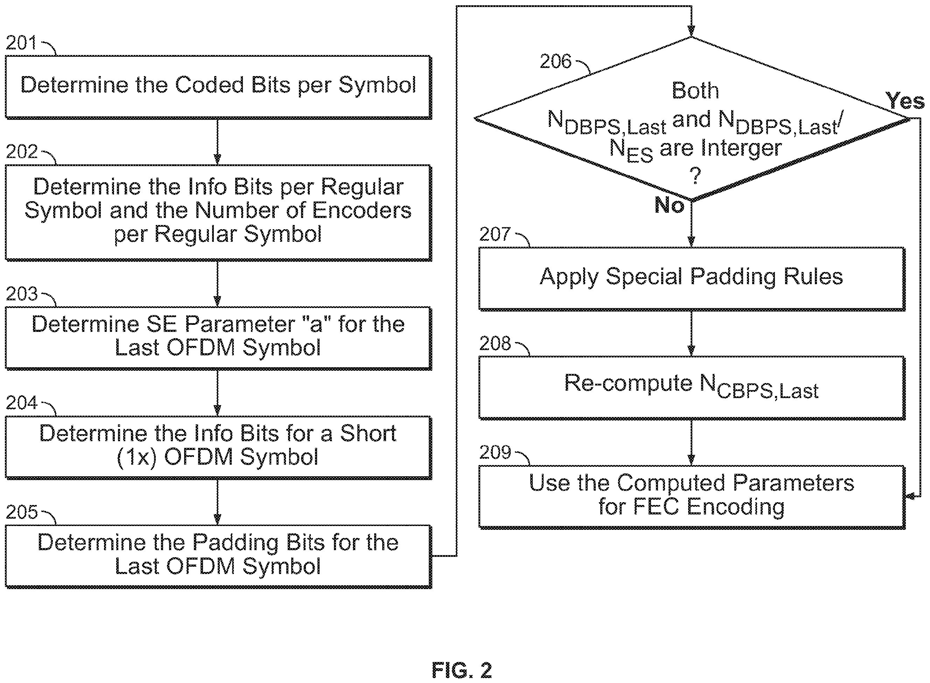

FIG. 1 provides an exemplary block diagram illustrating a transceiver system that includes a data encoder in which a padding scheme is employed, in accordance with various embodiments of the disclosure. As shown in FIG. 1, a transceiver system 100 may obtain input data 110 for transmission, e.g., from a processor of the system. An encoder 101 at the transceiver 100 may include an input data processing module 102 to pre-process data bits before forward error correcting (FEC) encoding. For example, the input data processing module 102 may determine parameters such as the number of coded bits per data symbol, a SE parameter, and/or the like, as further illustrated in 201-203 in FIG. 2.

The encoder 101 may further include a pre-FEC padding module 103, which may pad additional bits to the OFDM symbol, and then pass the padded bits to the FEC encoding module 104. A post-FEC padding module 105 can be employed to fill up the last OFDM symbol, e.g., with zero-padding. The padded data symbols may then be passed on to the interleaver 120 and modulation module 130 before transmitting the data 135. The data 135 may be modulated symbols output by modulation module 130.

FIG. 2 provides an exemplary logic flow diagram illustrating a padding procedure that is implemented in an encoder (e.g., 101 in FIG. 1), in accordance with various embodiments of the disclosure. At 201, an encoder may determine the coded bits per symbol. For example, the encoder may determine the coded bits per symbol ($N_{CBPS}$) for a user u based on the following determination

$$N_{CBPS}^{(u)} = N_{SD}^{(u)} \times N_{SS}^{(u)} \times N_{BPSCS}^{(u)}$$

where $N_{CBPS}^{(u)}$ denotes the number of coded bits per symbol in a $4\times$ symbol for user $u$; $N_{SD}^{(u)}$ denotes the number of scheduled data subcarriers in a $4\times$ symbol for user $u$; $N_{SS}^{(u)}$ denotes the number of special strings in a $4\times$ symbol for user $u$; and $N_{BPSCS}^{(u)}$ denotes the number of coded bits per subcarrier per spatial streams in a $4\times$ symbol for user $u$, $u=0, 1, 2, 3,$ etc. It is noted that for all the parameters defined above, the values can be configured differently for a specific user u, and the superscript "u" may be adopted or skipped interchangeably throughout the disclosure.

Specifically, when single user (SU) or multi-user (MU) multiple-input multiple-output (MIMO) system with physical protocol data unit (PPDU) is employed, $N_{SD}$ denotes the number of available data subcarriers.

At 202, the encoder determines the info bits per regular symbol. For example, the encoder may determine the info bits per symbol ($N_{DBPS}$) based on the following $N_{DBPS}^{(u)} = N_{CBPS}^{(u)} \times R^{(u)}$, where $N_{DBPS}^{(u)}$ denotes the number of data bits per symbol in a 4× symbol for user u, and R denotes the coding rate for user $u$, $u$=0, 1, 2, 3, etc.

The encoder may also determine the number of encoders per regular symbol, e.g.,

$$N_{ES}^{(u)} = \left\lceil N_{DBPS}^{(u)} \middle/ R^{(u)} \right\rceil,$$

wherein "⌈ ⌉" denotes a ceiling operation. For all valid number of scheduled data subcarriers, $N_{DBPS}^{(u)}$ and $N_{DBPS}^{(u)} \middle/ N_{ES}^{(u)}$ are integer numbers.

At 203, the encoder may start a pre-FEC padding procedure by determining a SE parameter "a" for the last OFDM symbol (i.e., a short symbol). Further discussion on determining the SE parameter "a" can be found in commonly owned U.S. Application No. 14/728,802. For example, the SE parameter a may take a value of 1, 2, 3 or 4.

At 204, the encoder may determine the number of information bits for a short (1x) OFDM symbol. In one example, the number of information bits can be determined based on the following: $N_{DBPS,short}^{(u)} = \frac{1}{4} N_{DBPS}^{(u)}$. For another example, the number of information bits can be determined based on the following:

$$N_{DBPS,short}^{(u)} = N_{CBPS,short}^{(u)} \times R^{(u)} = \frac{1}{4} N_{SD}^{(u)} \times N_{SS}^{(u)} \times N_{BPSCS}^{(u)} \times R^{(u)}.$$

At 205, the encoder determines the padding bits for the last OFDM symbol. For example, the number of data bits of the last symbol can be determined as follows: $N_{DBPS,last}^{(u)} = a \cdot N_{DBPS,short}^{(u)}$. The number of padding bits can be determined as follows: $N_{\Pr e-FEC-Pad}^{(u)} = N_{DBPS,last}^{(u)} - (N_{\inf o}^{(u)} - (N_{SYM} - 1) \cdot N_{DBPS}^{(u)})$, where $N_{\inf o}^{(u)}$ denotes the number of information bits for user u, and $N_{SYM}$ denotes the number of symbols.

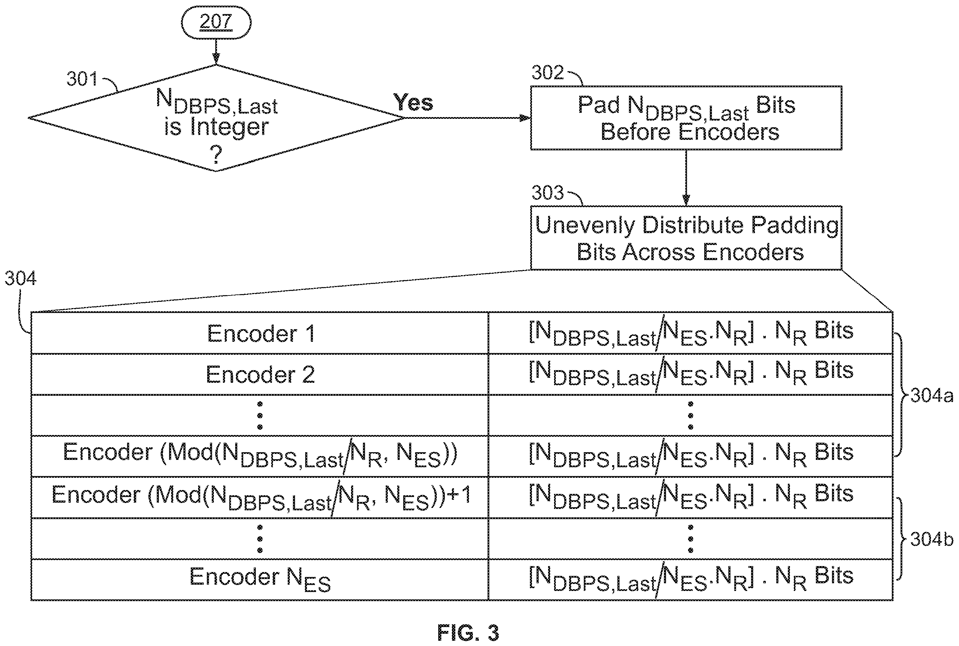

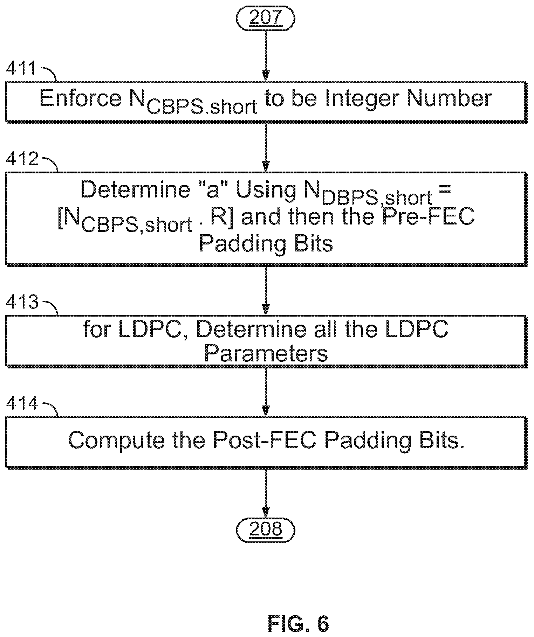

At decision 206, the encoder may determine whether $N_{DBPS,Last}$ or $N_{DBPS,Last}/N_{ES}$ is an integer. If one of the two values is not an integer, the encoder may apply special padding rules at 207, which may be further illustrated in various examples in FIGS. 3-6. After special padding rules have been applied at 207, the encoder may calculate the number of coded bits for the last symbol at 208 (as further discussed in connection with FIG. 6), and use the computed parameters for FEC encoding at 209.

Specifically, at 207, for a non-short padding scenario, e.g., when the SE parameter *a=4,* the last symbol can be encoded in the same way as a regular long symbol. Or alternatively, when the SE parameter *a=1, 2* or *3,* special padding for a non-integer $N_{DBPS,Last}$ or $N_{DBPS,Last}/N_{ES}$ are discussed in connection with FIGS. 3-6.

FIG. 3 provides an exemplary logic flow diagram illustrating an example special padding rule by applying unequal bits per encoder, in accordance with various embodiments of the disclosure. Continuing from 207 in FIG. 2, the encoder may determine whether $N_{DBPS,Last}$ is an integer at 301. When $N_{DBPS,Last}$ is an integer but $N_{DBPS,Last}/N_{ES}$ is not, the encoder may pad $N_{DBPS,Last}$ bits before encoders at 302, and then unevenly distribute padding bits across encoders at 302. For example, as shown in the table in FIG. 3, for a list of encoders 304, some encoders may have more bits (e.g., see 304b) padded than the rest encoders (e.g., see 304a).

Specifically, the parameter $N_R$ can be configured to be a different value per coding scheme, e.g., for binary convolutional coding (BCC) and low density parity-check (LDPC) coding. For example, the encoder can set $N_R$=1 for LDPC, and $N_R$= the number of bits per puncturing block given the coding rate for BCC.

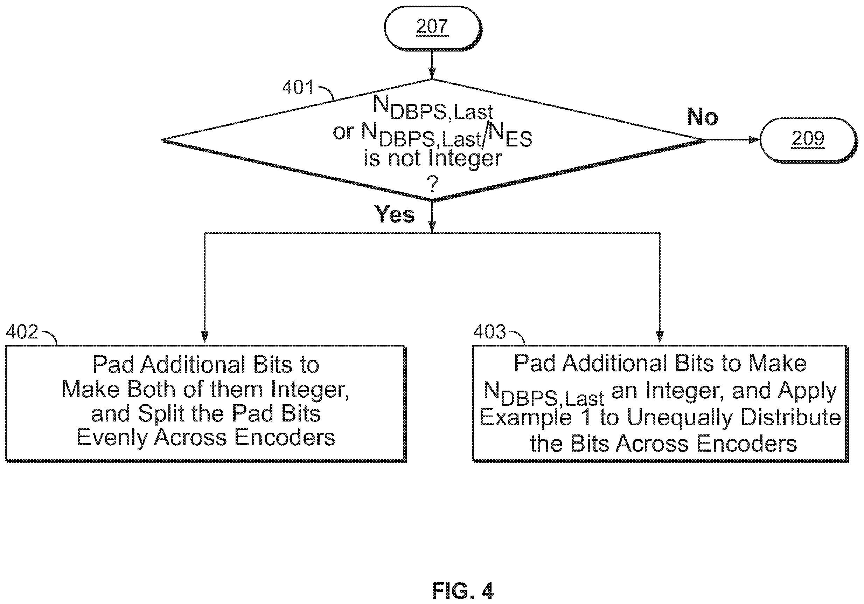

FIG. 4 provides an exemplary logic diagram illustrating an alternative implementation of an example special padding rule by adding additional padding bits, in accordance with various embodiments of the disclosure. Continuing on from 207 in FIG. 2, the encoder may determine whether one of $N_{DBPS,Last}$ and $N_{DBPS,Last}/N_{ES}$ is not an integer at 401. If not, the encoder may proceed with 209. Otherwise, the encoder may pad additional bits to make both of the two parameters integral, and then split the padding bits evenly across encoders at 402. For example, the encoder may first pad more bits if $N_{DBPS,Last}$ is not an integer, such that after padding the revised number of information bits for the last symbol may be determined based on the following:

$$\widetilde{N}_{DBPS,Last} = \left\lceil a \cdot \frac{1}{4} \cdot N_{SD} \cdot N_{SS} \cdot N_{BPSCS} \cdot R \right\rceil,$$

wherein "⌈ ⌉" denotes a ceiling operation. Then the encoder may pad more bits if $N_{DBPS,Last}/N_{ES}$ is not an integer, such that after the padding the revised number of information bits for the last symbol may be determined as follows:

$$\widetilde{\widetilde{N}}_{DBPS,Last} = \left\lceil \frac{\widetilde{N}_{DBPS,Last}}{N_{ES} \cdot N_R} \right\rceil \cdot N_{ES} \cdot N_R .$$

In an alternative non-claimed implementation, at 403, the encoder may pad additional bits to make $N_{DBPS,Last}$ an integer, and apply 402 to unequally distribute the bits across encoders.

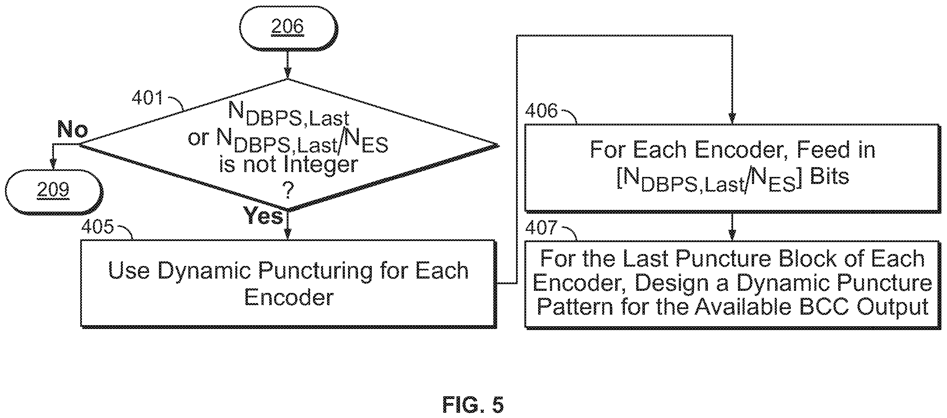

FIG. 5 provides an exemplary logic diagram illustrating an alternative implementation of an example special padding rule by apply dynamic puncturing for each encoder, in accordance with various embodiments of the disclosure.

Similarly, continuing on from 401, when one of $N_{DBPS,Last}$ and $N_{DBPS,Last} \big/ N_{ES}$ is not an integer, the encoder may use dynamic puncturing for each encoder at 405. At 406, for each encoder, $\left\lceil N_{DBPS,Last} \big/ N_{ES} \right\rceil$ may be fed, wherein "⌈ ⌉" denotes a ceiling operation. At 407, for the last puncture block of each encoder, a dynamic puncture pattern can be designed for the available BCC output. For example, any puncture pattern can be applied, such that the number of output bits can be set equivalent to $N_{CBPS,Last}$. If $N_{CBPS,Last}$ is not an integer, then the number of output bits can be set equivalent to $\lceil N_{CBPSLast} \rceil$, wherein "⌈ ⌉" denotes a ceiling operation.

In an alternative implementation, the encoder can enforce the data bits of the short symbol $N_{DBPS,Short}$ to be an integer. For example, an *f( )* mapping can be defined as the following:

$$N_{DBPS,Short} = f\left(N_{DBPS,Short}^{(u)}\right)$$

such that $N_{DBPS,Short}^{(u)}$ is an integer.

In one example, the encoder can set $\widetilde{N}_{DBPS,Short}^{(u)} = \left\lceil N_{DBPS,Short}^{(u)} \right\rceil$ or $\left\lfloor N_{DBPS,Short}^{(u)} \right\rfloor$, wherein "⌈ ⌉" denotes a ceiling operation, and "⌊ ⌋" denotes a floor operation; and then the SE parameter a and the data bits of the last OFDM symbol $N_{DBPS,Last}^{(u)}$ can be obtained as illustrated in FIGS. 3-5.

In another alternative non-claimed implementation, the encoder may configure a compatible number of scheduled data subcarriers $N_{SD}^{(u)}$. For example, Instead of using exactly ¼ of scheduled data tones, using a compatible $N_{SD}$ that leads to integer $N_{CBPS,Short}$ and $N_{DBPS,short}$ for all the MCS's. In this way, the number of information bits of the short symbol can be set as $N_{DBPS,Short} = N_{SD,Short\text{-}compatible} \cdot N_{SS} \cdot N_{BPSCS}$, where $N_{SD,\,Short\text{-}compatible}$ denotes a number of scheduled data subcarriers that is compatible for the short symbol. For example, $N_{SD,\,Short\text{-}compatible}$ can be set (close to) the value of $N_{SD}$ of the same bandwidth (BW) in 1x symbols. Examples of compatible $N_{SD}$ are shown in the following:

**Table 1. Example Compatible $N_{SD}$**

| $N_{SD}$ | $N_{SD,Short\text{-}Compatible}$ |
|---|---|
| 24 | 6 |
| 48 | 12 |
| 102 | 24 |
| 234 | 48 |
| 468 | 114 or 120 |
| 980 | 234, 240 or 246 |

FIG 6 provides an exemplary logic diagram illustrating an alternative implementation of an example special padding rule by enforcing an integer number of coded bits per symbol for short OFDM symbols, in accordance with various embodiments of the disclosure. Continuing on from 207 in FIG. 2, at 411, the encoder may enforce the number of coded bits of a short symbol $N_{CBPS,short}$ to be an integer number. For example, the encoder can set as

$$N_{CBPS,Short} = \left\lceil \frac{1}{4} \cdot N_{SD} \cdot N_{SS} \cdot N_{BPSCS} \right\rceil \text{ or } \left\lfloor \frac{1}{4} \cdot N_{SD} \cdot N_{SS} \cdot N_{BPSCS} \right\rfloor,$$

wherein "⌈ ⌉" denotes a ceiling operation, and "⌊ ⌋" denotes a floor operation. Or in another example, the encoder may use a "compatible" $N_{SD}$ as discussed above in connection with Table 1, which may make the $N_{CBPS,short}$ an integer

$$N_{SD,Short} = \left\lceil \frac{1}{4} \cdot N_{SD} \right\rceil$$

number. In this case, the number of scheduled data subcarriers for the short symbol can be set as

$$\left\lfloor \frac{1}{4} \cdot N_{SD} \right\rfloor,$$

or wherein "⌈ ⌉" denotes a ceiling operation, and "⌊ ⌋" denotes a floor operation, and the number of information bits of the short symbol can be set as $N_{CBPS,Short} = N_{SD,Short} \cdot N_{SS}$.

At 412, the encoder may determine the SE parameter a by using a number of information bits of the short symbol $N_{DBPS,Short} = \lfloor N_{CBPS,Short} \cdot R \rfloor$, wherein "⌊ ⌋" denotes a floor operation and then add the pre-FEC padding bits. Specifically, for BCC, the number of information bits of the short symbol may be determined as follows:

$$N_{DBPS,Short} = \left\lfloor \frac{N_{CBPS,Short} \cdot R}{N_{ES} \cdot N_R} \right\rfloor \cdot N_{ES} \cdot N_R.$$

In this case, a ceiling operation "⌈ ⌉" can be used alternatively for both BCC and LDPC.

At 413, for LDPC, the encoder may determine all the LDPC parameters, such as but not limited to parity-check matrix, block length, and/or the like. If an extra symbol is needed per LDPC encoding rule, the encoder may update the related LDPC parameters, and also update the number of coded bits of the last symbol $N_{CBPS,Last}$ and the number of information bits of the last symbol $N_{DBPS,Last}$. At 414, the encoder may compute the post-FEC padding bits to fill up the last data symbol, e.g., for post-FEC padding at 105 in FIG. 1.

In one implementation, after applying various special padding rules as illustrated in FIGS. 3-6, the number of coded bits for the last symbol can be re-computed (e.g., see 208 in FIG. 2). Specifically, in case of LDPC, the number of coded bits for the last symbol $N_{CBPS,Last}$ is updated and used together with the number of information bits for the last symbol $N_{DBPS,Last}$ to determine LDPC parameters. For example, $N_{CBPS,Last}$ can be determined based on

$$N_{CBPS,Last} = \left\lceil \frac{\left\lceil \dfrac{N_{DBPS,Last}}{R} \right\rceil}{R} \right\rceil \cdot N_{BPSCS},$$

$$N_{CBPS,Last} = \left\lceil \frac{N_{DBPS,Last}}{R} \right\rceil$$

or where R denotes the coding rate, and "⌈ ⌉" denotes a ceiling operation.

For both BCC and LDPC, after pre-FEC padding parameters is determined, $N_{CBPS,Last}$ can be used be the number of output bits for data transmission (e.g., at 135 in FIG. 1).

The various examples of special padding rules to configure coding parameters as illustrated in FIGS. 3-6, can be employed interchangeably, dynamically, or in a combinational manner. The special padding rules can also be applied to scenarios when space-time block codes (STBC) are used. For example, when STBC is employed, the number of symbols $N_{SYM}$ is calculated differently, but the number of coded bits for the last symbol $N_{CBPS,Last}$ or the number of information bits for the last symbol $N_{DBPS,Last}$ can be obtained in a similar manner as described in FIGS. 3-6.

While various embodiments of the present disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the disclosure. It is intended that the following claims define the scope of the disclosure and that methods and structures within the scope of these claims be covered thereby.

The foregoing is merely illustrative of the principles of this disclosure, and various modifications can be made without departing from the scope of the present disclosure. The above-described embodiments of the present disclosure are presented for purposes of illustration and not of limitation, and the present disclosure is limited only by the claims that follow.

**Claims**

1. A method for padding a signal extension of orthogonal frequency-division multiplexing, OFDM, symbols, the method comprising:

   obtaining, at a transceiver, a plurality of data symbols for transmission;
   applying (412) a signal extension for the last symbol of the plurality of data symbols, wherein the last symbol is an OFDM symbol that has a shorter length compared to other symbols from the plurality of data symbols;
   determining (206), based on a calculation of a number of information bits for each symbol of the plurality of data symbols, that the calculated number of information bits for the last symbol is not an integer value, wherein the calculated number of information bits for the last symbol is divided by a plurality of encoders, the plurality of encoders being used per data symbol;
   in response to determining (206) that the calculated number of information bits for the last symbol or the calculated number of information bits divided by the plurality of encoders is not an integer value:

      adding (207) a number of padding bits to the last symbol to make the calculated number of information bits and the calculated number of information bits divided by the plurality of encoders an integer value;
      splitting the padding bits evenly across the plurality of encoders;
      determining (208) a number of coded bits for the last symbol when the number of information bits for the last symbol has changed; and
      encoding (209) the plurality of data symbols for data transmission based on the determined number of coded bits for the last symbol.

2. The method of claim 1, further comprising:
   adding (302) a number of padding bits to the last symbol before forward error-corrective encoding based on the number of coded bits for the last symbol.

3. The method of any preceding claim, wherein adding (207) the number of padding bits to the last symbol further comprises applying puncturing for the plurality of encoders.

4. The method of any preceding claim, wherein adding (207) the number of padding bits to the last symbol further comprises enforcing (411) the number of information bits for the last symbol to be an integer value by performing a ceiling or floor operation.

5. The method of any preceding claim, wherein adding (207) the number of padding bits to the last symbol further comprises:

      determining an integer value for the number of coded bits for the last symbol by taking a ceiling or floor operation; and
      determining (412) a signal extension parameter based on the integer value for the number of coded bits for the last symbol.

6. The method of any preceding claim, wherein determining the number of coded bits for the last symbol further comprises:

      dividing the changed number of information bits for the last symbol by a coding rate; and
      taking a ceiling operation over a result of the dividing.

7. A system for padding a signal extension of orthogonal frequency-division multiplexing, OFDM, symbols, the system comprising:

      an input data processing module (102) to obtain a plurality of data symbols for transmission, and to apply a signal extension for the last symbol of the plurality of data symbols, wherein the last symbol is an OFDM symbol that has a shorter length compared to other symbols from the plurality of data symbols;

a pre-encoding padding module (103) communicatively coupled to the input data processing module (102), the pre-encoding padding module (103) being configured to determine, based on a calculation of a number of information bits for each symbol of the plurality of data symbols, that the calculated number of information bits for the last symbol is not an integer value, wherein the calculated number of information bits for the last symbol is divided by a plurality of encoders, wherein the plurality of encoders being used per data symbol, and wherein the pre-encoding padding module (103) is further configured to, in response to determining (206) that the number of information bits for the last symbol or the calculated number of information bits divided by the plurality of encoders is not an integer value, add a number of padding bits to the last symbol to make the calculated number of information bits and the calculated number of information bits divided by the plurality of encoders an integer value, to split the padding bits evenly across the plurality of encoders, and to determine a number of coded bits for the last symbol when the number of information bits for the last symbol has changed; and an encoding module (104) to encode the plurality of data symbols for data transmission based on the determined number of coded bits for the last symbol.

8. The system of claim 7, wherein the pre-encoding padding module (103) is further configured to:
add a number of padding bits to the last symbol before forward error-corrective encoding based on the number of coded bits for the last symbol.

## Patentansprüche

1. Verfahren zum Padding einer Signalerweiterung von OFDM-Symbolen (OFDM = "Orthogonales Frequenzmultiplexverfahren"), wobei das Verfahren umfasst:

Erhalten, an einem Transceiver, mehrerer Datensymbole zur Übertragung;
Anwenden (412) einer Signalerweiterung für das letzte Symbol der mehreren Datensymbole, wobei das letzte Symbol ein OFDM-Symbol ist, das im Vergleich zu anderen Symbolen der mehreren Datensymbole eine kürzere Länge hat;
Bestimmen (206), basierend auf einer Berechnung einer Anzahl von Informationsbits für jedes Symbol der mehreren Datensymbole, dass die berechnete Anzahl von Informationsbits für das letzte Symbol kein ganzzahliger Wert ist, wobei die berechnete Anzahl von Informationsbits für das letzte Symbol durch mehrere Codierer geteilt wird, wobei die mehreren Codierer pro Datensymbol verwendet werden;
als Reaktion auf das Bestimmen (206), dass die berechnete Anzahl von Informationsbits für das letzte Symbol oder die berechnete Anzahl von Informationsbits, geteilt durch die mehreren Codierer, kein ganzzahliger Wert ist:

Hinzufügen (207) einer Anzahl von Padding-Bits zum letzten Symbol, um die berechnete Anzahl von Informationsbits und die berechnete Anzahl von Informationsbits geteilt durch die mehreren Codierer zu einem ganzzahligen Wert zu machen;
gleichmäßiges Aufteilen der Padding-Bits über die mehreren Encoder;
Bestimmen (208) einer Anzahl von codierten Bits für das letzte Symbol, wenn sich die Anzahl der Informationsbits für das letzte Symbol geändert hat; und
Codieren (209) der mehreren Datensymbole für die Datenübertragung basierend auf der bestimmten Anzahl codierter Bits für das letzte Symbol.

2. Verfahren nach Anspruch 1, ferner umfassend:
Hinzufügen (302) einer Anzahl von Padding-Bits zum letzten Symbol vor der vorwärtsfehlerkorrigierenden Codierung basierend auf der Anzahl der codierten Bits für das letzte Symbol.

3. Verfahren nach einem der vorhergehenden Ansprüche, wobei das Hinzufügen (207) der Anzahl von Padding-Bits zum letzten Symbol ferner die Anwendung der Punktierung für die mehreren Codierer umfasst.

4. Verfahren nach einem der vorhergehenden Ansprüche, wobei das Hinzufügen (207) der Anzahl von Padding-Bits zu dem letzten Symbol ferner das Erzwingen (411) der Anzahl von Informationsbits für das letzte Symbol als ganzzahliger Wert durch Durchführen einer Abrundungs- oder Aufrundungsoperation umfasst.

5. Verfahren nach einem der vorhergehenden Ansprüche, wobei das Hinzufügen (207) der Anzahl von Padding-Bits zum letzten Symbol ferner umfasst:

Bestimmen eines ganzzahligen Wertes für die Anzahl der codierten Bits für das letzte Symbol durch Annahme einer Abrundungs- oder Aufrundungsoperation; und

Bestimmen (412) eines Signalerweiterungsparameters basierend auf dem ganzzahligen Wert für die Anzahl der codierten Bits für das letzte Symbol.

6. Verfahren nach einem der vorhergehenden Ansprüche, wobei das Bestimmen der Anzahl von codierten Bits für das letzte Symbol ferner umfasst:

Teilen der geänderten Anzahl von Informationsbits für das letzte Symbol durch eine Codierrate; und Annahme einer Aufrundungsoperation über ein Ergebnis des Teilens.

7. System zum Padding einer Signalerweiterung von OFDM-Symbolen (OFDM = "Orthogonales Frequenzmultiplexverfahren"), wobei das System umfasst:

ein Eingabedatenverarbeitungsmodul (102), um mehrere Datensymbole zur Übertragung zu erhalten und um eine Signalerweiterung für das letzte Symbol der mehreren Datensymbole anzuwenden, wobei das letzte Symbol ein OFDM-Symbol ist, das im Vergleich zu anderen Symbolen der mehreren Datensymbole eine kürzere Länge hat;

ein Vorcodierungs-Padding-Modul (103), das mit dem Eingangsdaten-Verarbeitungsmodul (102) kommunikativ gekoppelt ist, wobei das Vorcodierungs-Padding-Modul (103) dazu ausgelegt ist, basierend auf einer Berechnung einer Anzahl von Informationsbits für jedes Symbol der mehreren Datensymbole zu bestimmen, dass die berechnete Anzahl von Informationsbits für das letzte Symbol kein ganzzahliger Wert ist, wobei die berechnete Anzahl von Informationsbits für das letzte Symbol durch mehrere Codierer geteilt wird, wobei die mehreren Codierer pro Datensymbol verwendet werden,

und wobei das Vorcodierungs-Padding-Modul (103) ferner dazu ausgelegt ist, als Reaktion auf die Bestimmung (206), dass die Anzahl von Informationsbits für das letzte Symbol oder die berechnete Anzahl von Informationsbits, geteilt durch die mehreren Codierer, kein ganzzahliger Wert ist, eine Anzahl von Padding-Bits zum letzten Symbol hinzuzufügen, um die berechnete Anzahl von Informationsbits und die berechnete Anzahl von Informationsbits, geteilt durch die mehreren Codierer, zu einem ganzzahligen Wert zu machen, um die Padding-Bits gleichmäßig auf die mehreren Codierer aufzuteilen,

und eine Anzahl von codierten Bits für das letzte Symbol zu bestimmen, wenn sich die Anzahl der Informationsbits für das letzte Symbol geändert hat; und

ein Codiermodul (104) zum Codieren der mehreren Datensymbole für die Datenübertragung basierend auf der bestimmten Anzahl codierter Bits für das letzte Symbol.

8. System nach Anspruch 7, wobei das Vorcodierungs-Padding-Modul (103) ferner dazu ausgelegt ist:

eine Anzahl von Padding-Bits zum letzten Symbol vor der vorwärtsfehlerkorrigierenden Codierung basierend auf der Anzahl der codierten Bits für das letzte Symbol hinzuzufügen.


**Revendications**

1. Procédé de remplissage d'une extension de signal de symboles de multiplexage par répartition orthogonale de la fréquence, OFDM, le procédé comprenant :

l'obtention, au niveau d'un émetteur-récepteur, d'une pluralité de symboles de données à transmettre ;
l'application (412) d'une extension de signal pour le dernier symbole de la pluralité de symboles de données, le dernier symbole étant un symbole OFDM d'une longueur plus courte en comparaison à celle d'autres symboles de la pluralité de symboles de données ;
la détermination (206), sur la base d'un calcul d'un nombre de bits d'information pour chaque symbole de la pluralité de symboles de données, que le nombre calculé de bits d'information pour le dernier symbole n'est pas une valeur entière, le nombre calculé de bits d'information pour le dernier symbole étant divisé par une pluralité de codeurs, la pluralité de codeurs étant utilisée pour chaque symbole de données ;
en réponse à la détermination (206) que le nombre calculé de bits information pour le dernier symbole ou le nombre calculé de bits d'information divisé par la pluralité de codeurs n'est pas une valeur entière :

l'ajout (207) d'un nombre de bits de remplissage au dernier symbole pour faire du nombre calculé de bits d'information et du nombre calculé de bits d'information divisé par la pluralité de codeurs une valeur entière ;
la répartition uniforme des bits de remplissage pour la pluralité de codeurs ;

la détermination (208) d'un nombre de bits codés pour le dernier symbole quand le nombre de bits d'information pour le dernier symbole a changé ; et

le codage (209) de la pluralité de symboles de données pour une transmission de données sur la base du nombre déterminé de bits codés pour le dernier symbole.

2. Procédé selon la revendication 1, comprenant en outre :
l'ajout (302) d'un nombre de bits de remplissage au dernier symbole avant un codage de correction d'erreur anticipée sur la base du nombre de bits codés pour le dernier symbole.

3. Procédé selon n'importe quelle revendication précédente, dans lequel l'ajout (207) du nombre de bits de remplissage au dernier symbole comprend en outre l'application d'un poinçonnement pour la pluralité de codeurs.

4. Procédé selon n'importe quelle revendication précédente, dans lequel l'ajout (207) du nombre de bits de remplissage au dernier symbole comprend en outre l'assurance (411) que le nombre de bits d'information pour le dernier symbole sera une valeur entière en réalisant une opération plafond ou plancher.

5. Procédé selon n'importe quelle revendication précédente, dans lequel l'ajout (207) du nombre de bits de remplissage au dernier symbole comprend en outre :

la détermination d'une valeur entière pour le nombre de bits codés pour le dernier symbole en utilisant une opération plafond ou plancher ; et
la détermination (412) d'un paramètre d'extension de signal sur la base de la valeur entière pour le nombre de bits codés pour le dernier symbole.

6. Procédé selon n'importe quelle revendication précédente, dans lequel la détermination du nombre de bits codés pour le dernier symbole comprend en outre :

la division du nombre changé de bits d'information pour le dernier symbole par un taux de codage ; et
l'utilisation d'une opération plafond sur un résultat de la division.

7. Système de remplissage d'une extension de signal de symboles de multiplexage par répartition orthogonale de la fréquence, OFDM, le système comprenant :

un module de traitement de données d'entrée (102) pour obtenir une pluralité de symboles de données à transmettre, et appliquer une extension de signal pour le dernier symbole de la pluralité de symboles de données, le dernier symbole étant un symbole OFDM d'une longueur plus courte en comparaison à celle d'autres symboles de la pluralité de symboles de données ;
un module de remplissage de précodage (103) couplé en communication au module de traitement de données d'entrée (102), le module de remplissage de précodage (103) étant configuré pour déterminer, sur la base d'un calcul d'un nombre de bits d'information pour chaque symbole de la pluralité de symboles de données, que le nombre calculé de bits d'information pour le dernier symbole n'est pas une valeur entière, le nombre calculé de bits d'information pour le dernier symbole étant divisé par une pluralité de codeurs, la pluralité de codeurs étant utilisée pour chaque symbole de données ;
et dans lequel le module de remplissage de précodage (103) est configuré en outre pour, en réponse à la détermination (206) que le nombre calculé de bits d'information pour le dernier symbole ou le nombre calculé de bits d'information divisé par la pluralité de codeurs n'est pas une valeur entière, ajouter un nombre de bits de remplissage au dernier symbole pour faire du nombre calculé de bits d'information et du nombre calculé de bits d'information divisé par la pluralité de codeurs une valeur entière, répartir uniformément les bits de remplissage pour la pluralité de codeurs, et déterminer un nombre de bits codés pour le dernier symbole quand le nombre de bits d'information pour le dernier symbole a changé ; et
un module de codage (104) pour coder la pluralité de symboles de données pour une transmission de données sur la base du nombre déterminé de bits codés pour le dernier symbole.

8. Système selon la revendication 7, dans lequel le module de remplissage de précodage (103) est configuré en outre pour :
ajouter un nombre de bits de remplissage au dernier symbole avant un codage de correction d'erreur anticipée sur la base du nombre de bits codés pour le dernier symbole.

EP 3 308 486 B1

**FIG. 1**

EP 3 308 486 B1

```
┌─────────────────────────────────────┐
│ 201                                  │
│  Determine the Coded Bits per Symbol │
└─────────────────────────────────────┘
                 │
                 ▼
┌─────────────────────────────────────┐
│ 202                                  │
│  Determine the Info Bits per Regular │
│  Symbol and the Number of Encoders   │
│  per Regular Symbol                  │
└─────────────────────────────────────┘
                 │
                 ▼
┌─────────────────────────────────────┐
│ 203                                  │
│  Determine SE Parameter "a" for the  │
│  Last OFDM Symbol                    │
└─────────────────────────────────────┘
                 │
                 ▼
┌─────────────────────────────────────┐
│ 204                                  │
│  Determine the Info Bits for a Short │
│  (1x) OFDM Symbol                    │
└─────────────────────────────────────┘
                 │
                 ▼
┌─────────────────────────────────────┐
│ 205                                  │
│  Determine the Padding Bits for the  │
│  Last OFDM Symbol                    │
└─────────────────────────────────────┘
```

206 — Both $N_{DBPS,Last}$ and $N_{DBPS,Last}/N_{ES}$ are Interger ?

**Yes**

**No**

```
┌─────────────────────────────────────┐
│ 207                                  │
│  Apply Special Padding Rules         │
└─────────────────────────────────────┘
                 │
                 ▼
┌─────────────────────────────────────┐
│ 208                                  │
│  Re-compute $N_{CBPS,Last}$          │
└─────────────────────────────────────┘
                 │
                 ▼
┌─────────────────────────────────────┐
│ 209                                  │
│  Use the Computed Parameters         │
│  for FEC Encoding                    │
└─────────────────────────────────────┘
```

**FIG. 2**

207

301

$N_{DBPS,Last}$ is Integer ?

**Yes**

302

Pad $N_{DBPS,Last}$ Bits Before Encoders

303

Unevenly Distribute Padding Bits Across Encoders

304

| Encoder 1 | $\lceil N_{DBPS,Last}/N_{ES}.N_R \rceil . N_R$ Bits |
|---|---|
| Encoder 2 | $\lceil N_{DBPS,Last}/N_{ES}.N_R \rceil . N_R$ Bits |
| ⋮ | ⋮ |
| Encoder $(Mod(N_{DBPS,Last}/N_R, N_{ES}))$ | $\lceil N_{DBPS,Last}/N_{ES}.N_R \rceil . N_R$ Bits |
| Encoder $(Mod(N_{DBPS,Last}/N_R, N_{ES}))+1$ | $\lceil N_{DBPS,Last}/N_{ES}.N_R \rceil . N_R$ Bits |
| ⋮ | ⋮ |
| Encoder $N_{ES}$ | $\lceil N_{DBPS,Last}/N_{ES}.N_R \rceil . N_R$ Bits |

304a

304b

**FIG. 3**

FIG. 4

EP 3 308 486 B1

```
                        ┌──────────┐
                        │   206    │
                        └────┬─────┘
                             │
        401─╮               ▼
   ┌──────╮      ╱╲
No │      │    ╱    ╲  N_DBPS,Last
   └──────┘  ╱        ╲ or N_DBPS,Last/N_ES
   ┌──────╮  ╲  is not Integer ╱
   │  209 │    ╲    ╱   ?
   └──────┘      ╲╱
   405─╮        Yes │
```

$N_{DBPS,Last}$ or $N_{DBPS,Last}/N_{ES}$ is not Integer ?

**No**

**Yes**

406

For Each Encoder, Feed in $[N_{DBPS,Last}/N_{ES}]$ Bits

405

Use Dynamic Puncturing for Each Encoder

407

For the Last Puncture Block of Each Encoder, Design a Dynamic Puncture Pattern for the Available BCC Output

**FIG. 5**

FIG. 6

$(207)$

411 — Enforce $N_{CBPS,short}$ to be Integer Number

412 — Determine "a" Using $N_{DBPS,short} = [N_{CBPS,short} \cdot R]$ and then the Pre-FEC Padding Bits

413 — for LDPC, Determine all the LDPC Parameters

414 — Compute the Post-FEC Padding Bits.

$(208)$

EP 3 308 486 B1

**EP 3 308 486 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62174158
- US 17915016
- US 72880215
- US 20140126659 A1
- US 20130315264 A1
- US 728802